# EUROPÄISCHE PATENTSCHRIFT

(11) **EP 0 757 547 B1**
(45) Veröffentlichungstag und Bekanntmachung des Hinweises auf die Patenterteilung: **10.06.1998**
(21) Anmeldenummer: 95917953.2
(22) Anmeldetag: 25.04.1995
(51) Int. Cl.: A61C 8/00, A61C 17/00

(54) **EINRICHTUNG ZUR OBERFLÄCHENBEARBEITUNG VON ZAHNIMPLANTATEN**
DEVICE FOR CLEANING THE SURFACE OF DENTAL IMPLANTS
DISPOSITIF DE NETTOYAGE DE SURFACE DES IMPLANTS DENTAIRES

(30) Priorität: 27.04.1994 DE 4414610
(43) Veröffentlichungstag der Anmeldung: 12.02.1997
(73) Patentinhaber: Altvater, Axel, 71069 Sindelfingen (DE)
(72) Erfinder: Altvater, Axel, 71069 Sindelfingen (DE)
(74) Vertreter: Gleiss, Alf-Olav, Dr.jur. Dipl.-Ing.
(86) Internationale Anmeldenummer: EP9501551
(87) Internationale Veröffentlichungsnummer: WO9528893

(56) Entgegenhaltungen:
- CH-A- 676 663
- US-A- 5 201 656

## Beschreibung

Die Erfindung betrifft eine Einrichtung zur Oberflächenbearbeitung von inserierten, oralen Implantaten und/oder darauf aufgesetzten Abutments nach dem Oberbegriff des Anspruchs 1.

Eine derartige Einrichtung ist beispielsweise aus der Druckschrift US-A-5201656 bekannt. Der Nachteil dieser Einrichtung ist darin zu sehen, daß die Reinigung der Oberfläche der zu bearbeitenden Implantate und/oder Abutments nicht ausreichend effektiv ist.

Darüber hinaus müssen heutzutage Implantate der hier angesprochenen Art in regelmäßigen Abständen gereinigt werden, wobei Häkchen beziehungsweise Küretten vorzugsweise aus Kunststoff verwendet werden. Nachteilig ist dabei, daß die Reinigung sehr umständlich und nicht ausreichend effektiv ist. Besonders tiefe subgingivale Anteile können auf diese Weise nicht erreicht werden.

Es ist daher Aufgabe der Erfindung, eine Einrichtung der oben genannten Art zu schaffen, die diese Nachteile nicht aufweist.

Zur Lösung dieser Aufgabe wird eine Einrichtung für Oberflächen-Bearbeitung vorgeschlagen, die sich dadurch auszeichnet, daß die Reinigungskürette mindestens eine Kante aufweist, die als auf der Oberfläche abgelagerte Substanzen abtragende Schneide oder Reinigungskante ausgebildet ist.

Dadurch, daß eine Schneide beziehungsweise als Schneide wirkende Kante auf die zu reinigende Oberfläche einwirkt, wird eine sehr effektive, flächige Reinigung sicher gestellt, die wesentlich gründlicher ist als bei dem herkömmlichen Verfahren.

Bevorzugt wird ein Ausführungsbeispiel der Einrichtung, bei dem die Reinigungskürette als Hülse ausgebildet ist, die mindestens einen Schlitz aufweist. Eine Kante des Schlitzes dient quasi als Schneide, die auf der Oberfläche des Implantats beziehungsweise des Abutments abgelagerte Substanzen abträgt. Die Kürette ist damit sehr einfach aufgebaut und somit kostengünstig realisierbar. Die Ausgestaltung gewährleistet eine gründliche Reinigung der betroffenen Oberflächen.

Weiterhin wird eine Ausführungsform der Einrichtung bevorzugt, bei der der Schlitz in der Hülse etwa entlang einer gedachten Schraubenlinie verläuft, die so angeordnet ist, daß abgetragene Substanzen bei einer Drehung der Reinigungskürette in die Mundhöhle ausgetragen werden.

Besonders bevorzugt wird eine Ausführungsform der Einrichtung, bei der die Reinigungskürette als drehsymmetrisches Teil ausgebildet und auf das Implantat beziehungsweise Abutment aufsteckbar ist. Besonders bei der Reinigung von drehsymmetrischen Implantaten und Abutments ergibt sich dadurch eine besonders einfache und gleichzeitig sehr intensive Reinigung der Oberflächen.

Weiterhin wird ein Ausführungsbeispiel der Einrichtung bevorzugt, bei dem die Reinigungskürette auf eine Aufnahme aufsetzbar ist, die die Handhabung der Kürette wesentlich vereinfacht und die gegebenenfalls auch mit einem maschinellen Antrieb koppelbar ist.

Ein weiteres Ausführungsbeispiel der Einrichtung zeichnet sich dadurch aus, daß auf das zu reinigende Implantat oder Abutment eine Führung aufsetzbar ist, auf die die Reinigungskürette aufgesteckt und damit leicht an die zu reinigenden Oberflächen herangeführt wird.

Weitere Ausgestaltungen ergeben sich aus den übrigen Unteransprüchen.

Die Erfindung wird im folgenden anhand der Zeichnungen näher erläutert. Es zeigen:
- Figur 1: einen Längs-Teilschnitt durch ein erstes Ausführungsbeispiel einer auf ein Implantat aufgesteckten Einrichtung zur Oberflächenbearbeitung;
- Figur 2: eine Seitenansicht einer Reinigungskürette gemäß Figur 1 und
- Figur 3: einen Längsschnitt durch den unteren Teil eines zweiten Ausführungsbeispiels einer Einrichtung der hier angesprochenen Art.

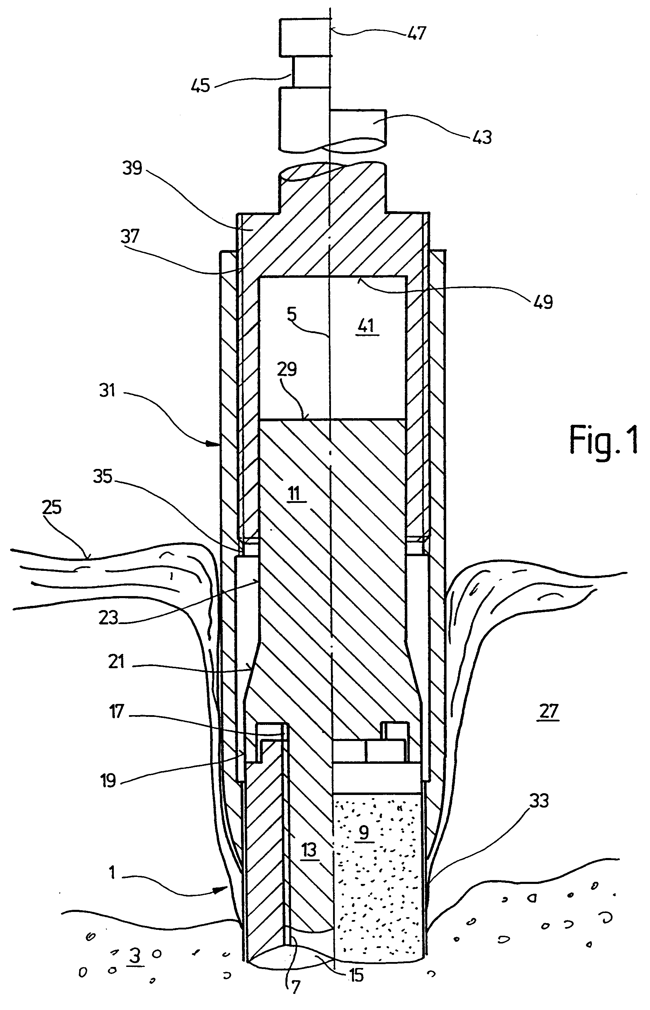

Aus der Schnittdarstellung in Figur 1 ist ein Implantat 1 erkennbar, das in einem Kieferknochen 3 eingesetzt ist. Das Implantat 1 ist drehsymmetrisch ausgebildet. Die links von einer Mittelachse 5 liegende Hälfte des Implantats 1 ist im Längsschnitt, die rechts von dieser Achse liegende in Seitenansicht wiedergegeben. Die Darstellung in Figur 1 zeigt nur das obere Ende des Implantats 1, das sich weiter in den Kieferknochen 3 fortsetzt.

Das Implantat 1 ist zumindest in seinem oberen Bereich als Hohlkörper beziehungsweise Hülse ausgebildet und mit einem Innengewinde 7 versehen. Die Außenseite des Implantats 1 kann mit einer biologisch verträglichen Beschichtung 9 beispielsweise aus Titanplasma versehen sein.

Oberhalb des Implantats 1 ist ein als Führung dienender Führungsstift 11 vorgesehen, der seinerseits vorzugsweise drehsymmetrisch ausgebildet ist und mit einem Gewindestift 13 in einen Hohlraum 15 des Implantats 1 eingreift. Er ist mit einem Außengewinde 17 versehen, das mit dem Innengewinde 7 des Implantats 1 zusammenwirkt und eine sichere Verankerung des Führungsstifts 11 auf dem Implantat 1 sicherstellt.

In dem an das Implantat 1 angrenzenden Bereich des Führungsstifts 11 ist dessen erste Außenfläche 19 - ebenso wie die des Implantats 1- zylindrisch ausgebildet, wobei die Außendurchmesser dieser ersten Außenfläche 19 und des Implantats 1 übereinstimmen. Oberhalb der zylindrischen ersten Außenfläche 19 ist die Außenfläche 21 des Führungsstifts 11 konisch ausgebildet, so daß sich hier eine kegelstumpfförmige Mantelfläche ergibt, an die sich eine weitere zylindrische zweite Außenfläche 23 anschließt, deren Außenradius kleiner ist als die der ersten Außenfläche 19.

Aus Figur 1 ist ersichtlich, daß das Implantat 1 etwas über die Oberfläche des Kieferknochens 3 hinausragt, nicht jedoch bis zur Oberfläche 25 des Zahnfleisches 27 ragt. Die Länge des Führungsstifts 11 ist so gewählt, daß dessen dem Implantat 1 abgewandtes Ende 29 über die Oberfläche 25 des Zahnfleisches 27 hinausragt.

Über den Führungsstift 11 ist eine Reinigungskürette 31 gestülpt, deren Lange so gewählt ist, daß sie das Zahnfleisch 27 durchdringt und den oberen, aus dem Kieferknochen 3 ragenden Teil des Implantats 1 zumindest über eine gewisse Strecke übergreift, nicht jedoch den Kieferknochen 3 berührt. Die Reinigungskürette 31 ist ihrerseits als Hülse ausgebildet, die an ihrem unteren, dem Kieferknochen 3 zugewandten Ende sich konisch verjüngt und damit ohne eine Schädigung des Zahnfleisches 27 bis zur Außenfläche 33 des Implantats 1 vordringen kann. Der Innendurchmesser der Reinigungskürette 31 ist so gewählt, daß diese auf der Außenfläche 33 des Implantats 1 anliegt und eine gewisse Druckkraft auf diese ausübt.

Im oberen Bereich der Hülse ist ein Innengewinde 35 vorgesehen, in das eine mit einem Außengewinde 37 versehene Aufnahme 39 eingreift.

Die Aufnahme 39 ist als Hülse ausgebildet, die einen Innenraum 41 umschließt. Dessen Innendurchmesser ist so auf den Außendurchmesser der zweiten Außenfläche 23 des Führungsstifts 11 angepaßt, daß dieser als Führung für die Aufnahme 39 dient, so daß die Aufnahme 39 gemeinsam mit der Reinigungskürette 31 auf dem Führungsstift 1 einer Drehbewegung unterworfen werden kann.

Die Aufnahme 39 setzt sich an ihrem dem Implantat 1 abgewandten Ende in einem Aufnahmestift 43 fort, der mit einem geeigneten Manipulator zusammenwirkt, der beispielsweise in einem Drehknopf, einem Handaufsatz oder einem einer Bohrmaschine zugeordneten Winkelstück bestehen kann.

Er ist beispielsweise mit einer in dessen Außenfläche eingebrachten Nut 45 versehen, um eine Kopplung mit dem Manipulator zu gewährleisten. Um einen zur Übertragung des erforderlichen Drehmoments günstigen Formschluß zu gewährleisten, ist die oberste Hälfte des Aufnahmestifts 43 abgetragen, so daß sich eine entsprechende Anlagefläche 47 ergibt.

Der Innenraum 41 der Aufnahme 39 ist vorzugsweise zylindrisch ausgebildet. Er reicht so weit in die Aufnahme 39 hinein, daß der Führungsstift 11 beim Aufschieben der Aufnahme 39 frühestens dann am Grund 49 des Innenraums 41 anschlägt, wenn die Reinigungskürette 31 die in Figur 1 dargestellte Arbeitsposition erreicht hat.

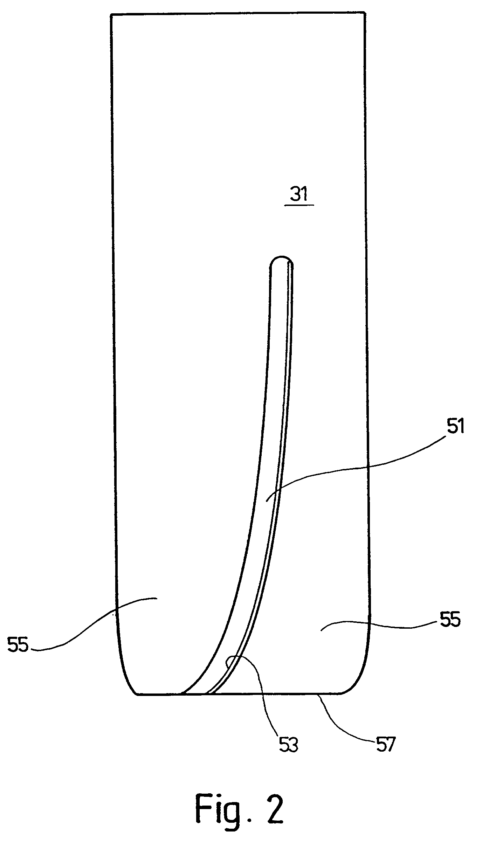

Figur 2 zeigt die Reinigungskürette 31 in Seitenansicht. Dabei wird ein in die Wandung der Reinigungskürette 31 eingebrachter Schlitz 51 erkennbar, der einer Schraubenlinie folgt und dessen eine Kante als Schneide 53 dient. Besonders im unteren Bereich der Schneide 53 ist der in etwa schraubenlinienförmige Verlauf des Schlitzes 51 vorteilhaft, weil von der Schneide 53, von der Außenfläche 33 eines Implantats 1, abgetragene Substanzen nach oben wegbefördert werden und so in die Mundhöhle des Patienten gelangen. Die Länge des Schlitzes 51 ist zumindest so zu wählen, daß vom Implantat 1 abgetragene Substanzen wenigstens so weit nach oben in Richtung zur Mundhöhle ausgetragen werden können, daß eine leichte Ausspülung möglich ist.

Die Reinigungskürette 31 ist hier vereinfacht dargestellt. Bevorzugt werden Ausführungsformen mit beispielsweise drei Schlitzen 51, die jeweils Reinigungsfinger 55 begrenzen.

Zur Funktion der Reinigungskürette 31 ist folgendes festzuhalten:

Um eine Reinigung der Außenfläche 33 des Implantats 1 durchzuführen, werden auf das Implantat 1 aufgebrachte Befestigungselemente entfernt und der Führungsstift 11 aufgeschraubt. Dadurch, daß dieser über die Oberfläche 25 des Zahnfleisch 27 hinaussteht, ist die Position des Implantats 1 leicht erkennbar. Auf den Führungsstift 11 kann nunmehr die Reinigungskürette 31 aufgeschoben werden, bis die gewünschte Arbeitstiefe erreicht ist. Um eine Schädigung des Kieferknochens 3 zu vermeiden, kann die Innenseite des Hohlraums 41 mit einem mit dem oberen Ende 29 des Führungsstifts 11 zusammenwirkenden Vorsprung versehen sein. Es ist auch möglich, den Grund 49 des Hohlraums 41 so weit herunterzuziehen, daß dieser am oberen Ende 29 der Führung 11 anschlägt, wenn die gewünschte Arbeitstiefe erreicht ist. Falls erforderlich kann auch der Knochen bis zu einer definierbaren Tiefe abgetragen werden.

Die Reinigung der Außenfläche 33 des Implantats 1 kann durch eine Auf- und Ab-Bewegung der Reinigungskürette 31 durchgeführt werden. Es bedarf dann in einem Folgeschritt, der Beseitigung der von der Außenfläche 33 abgetragenen Substanzen. Bei einer derartigen Reinigung dient eine Unterkante 57 der Reinigungskürette 31 der Reinigung der Außenfläche 33.

Bevorzugt wird allerdings eine drehsymmetrische Ausgestaltung sowohl des Führungsstifts 11, als auch der dann als Drehkürette bezeichneten Reinigungskürette 31, als auch der Aufnahme 39. Durch die schraubenlinienförmige Ausgestaltung des Schlitzes 51 werden von der Schneide 53 abgetragene und von der Außenfläche 33 gelöste Substanzen nach oben in die Mundhöhle ausgetragen. Während der Reinigung der Außenfläche 33 des Implantats 1 wird also mittels des Manipulators eine Drehbewegung der Aufnahme 39 und damit der Reinigungskürette 31 bewirkt, die dabei sicher auf dem Führungsstift 11 geführt wird, der aufgrund seiner auf den Innenraum 41 abgestimmten Abmessungen als Zentrierung und quasi Drehachse für die Reinigungskürette 31 dient und ein Verkanten vermeidet.

Eine besonders rasche Reinigung der Außenfläche 33 ergibt sich bei mehreren Schlitzen 51.

Der Innendurchmesser der als Hülse ausgebildeten Reinigungskürette 31 ist in deren unterem Bereich, der mit der Außenfläche 33 des Implantats 1 zusammenwirkt, auf dessen Außendurchmesser abgestimmt, so daß die Reinigungskürette 31 unter einer gewissen Vorspannung auf der Außenfläche 33 des Implantats 1 aufliegt und eine gründliche Reinigung gewährleistet ist.

Wird die Reinigungskürette 31 aus einem elastischen Material hergestellt, kann der Innendurchmesser auch etwas kleiner als der Außendurchmesser der Außenfläche 33 gewählt werden. Die Reinigungsfinger 55 werden dann beim Aufbringen der Reinigungskürette 31 im Bereich der konischen Außenfläche 21 aufgeweitet und gleiten stoßfrei von der ersten Außenfläche 19 des Führungsstifts 11 auf die Außenfläche 33 des Implantats 1. Die elastisch federnden Reinigungsarme 55 liegen sicher an der Außenfläche 33 an, so daß die jeweilige Schneide 53 Verunreinigungen gründlich abträgt.

Aus dem oben Gesagten ist ersichtlich, daß im untersten Bereich der als Hülse ausgebildeten Reinigungskürette 31 ein Innenkonus vorgesehen werden kann, der sich in Richtung zur Unterkante 57 erweitert und damit als Einführhilfe für den Führungsstift 11 dient. Gegebenenfalls kann dann auf die konische Außenfläche 21 verzichtet werden.

Bei dem in Figur 1 dargestellten Ausführungsbeispiel ist die zweite Außenfläche 23 mit einem wesentlich kleineren Außendurchmesser als die erste Außenfläche 19 des Führungsstifts 11 versehen, so daß die Reinigungskürette 31 leicht aufgesetzt werden kann.

Auf das in Figur 1 dargestellte Implantat 1 kann ein sogenanntes Abutment (hier nicht dargestellt) aufgesetzt sein, das eine vorzugsweise zylindrische Außenfläche aufweist und das mittels eines Gewindestifts, der in das Innengewinde 7 eingreift, auf dem Implantat 1 befestigt ist. Das Abutment weist seinerseits ein Innengewinde auf, in das Gewindestifte beliebiger Aufbauten aber eben auch der Gewindestift 13 des Führungsstifts 11 eingreifen können. Der Außendurchmesser des Abutments entspricht dem des Implantats 1 und der ersten Außenfläche 19 des Führungsstifts 11, so daß eine Reinigung auch der Oberfläche des Abutments mit der in Figur 1 dargestellten Reinigungskürette 31 ohne weiteres möglich ist. Das Abutment kann -ebenso wie das Implantat 1- der Anbringung von Befestigungselementen dienen, an denen künstliche Zähne oder dergleichen verankert werden.

Der Führungsstift 11 kann aus einem geeigneten Kunststoff oder aus Metall hergestellt sein. Es ist auch die Verwendung von Keramik zur Herstellung eines derartigen Führungsstifts 11 denkbar.

Die Aufnahme 39 kann aus jedem beliebigen geeigneten Material hergestellt sein, also aus Kunststoff, Metall oder dergleichen.

Bei der Herstellung der Reinigungskürette 31 kann Kunststoffmaterial verwendet werden, das auch mittels eines Spritzguß- beziehungsweise Compression-Molding-Verfahrens herstellbar ist. Denkbar ist auch die Verwendung von Metall oder Keramik bei der Herstellung der Reinigungskürette.

Sofern eine besonders scharfe Schneide 53 von Interesse ist, ist eine Metall-Kürette vorzuziehen. Denkbar ist jedoch auch eine Kunststoff-Kürette mit einem Metalleinsatz zu verwenden. Die Schneide 53 kann nachschleifbar ausgebildet sein.

Sofern relativ weiche Substanzen von der Oberfläche des Implantats 1 beziehungsweise eines Abutments abgetragen werden sollen, können bevorzugt Kunststoff-Reinigungsküretten eingesetzt werden. Sollen jedoch harte Ablagen beispielsweise Konkremente abgetragen werden, wird eine Metall-Kürette bevorzugt.

Die hier beschriebene Reinigungskürette 31 ist nicht nur für übliche Reinigungsverfahren einsetzbar. Es ist auch denkbar, die Beschichtung 9 im obersten Bereich des Implantats 1 abzutragen, was insbesondere dann erforderlich ist, wenn pathogene Keime bis zum Implantat 1 vorgedrungen sind und sich in der vorzugsweise porösen Beschichtung 9 festgesetzt haben, so daß eine medikamentöse Bekämpfung der Keime praktisch ausgeschlossen ist.

Durch die besondere Ausgestaltung der Kanten des Schlitzes 51 kann nicht nur eine Abtragung der Beschichtung 9 erreicht werden. Es ist auch möglich die dabei geschaffene glatte Außenfläche 33 des Implantats 1 zu konditionieren, also für die Anlagerung von Gewebe wieder aufzurauen.

Die Reinigungskürette kann auf ihrer Innenseite auch mit mindestens einem, von einem oder mehreren Reinigungsfinger ausgehenden Innengewinde versehen sein, das mit einem, in den Figuren nicht gezeichneten Außengewinde des Implantats beziehungsweise Abutments kämmt und dieses reinigt. Durch diese Formanpassung können auch schwer zugängliche, auf herkömmliche Weise kaum zugängliche Bereiche gründlich gereinigt werden.

Durch die Verwendung der hier beschriebenen Einrichtung ist es möglich, die begrenzten Abwehrmöglichkeiten des periimplantäteren Weichgewebes auszugleichen und Infektionen zu bekämpfen. Auf jeden Fall können mit der hier beschriebenen Reinigungskürette 31 tiefe subgingivale Verunreinigungen auf der Oberfläche eines Implantats oder eines darauf angebrachten Abutments gründlich beseitigt werden. Durch geeignete Wahl des Materials der Drehkürette können die verschiedensten Beläge, selbst eine Beschichtung des Implantats abgetragen werden. Bei der Abtragung einer Beschichtung des Implantats werden Reinigungsküretten aus Titan-Tantal-Legierung bevorzugt.

Die Reinigungskürette 31 kann schließlich auch auf ihrer Außenseite mit Schneiden versehen sein, die der Abtragung von Gewebe entweder im Bereich zum Implantat 1 oder von Knochengewebe dienen.

Durch entsprechende Wahl der Materialien für die Aufnahme 39, die Reinigungskürette 31 und den Führungsstift 11 ist eine Sterilisierung und damit eine Mehrfachverwendung möglich. Denkbar ist es auch alle oder einzelne Teile lediglich nur einmal einzusetzen.

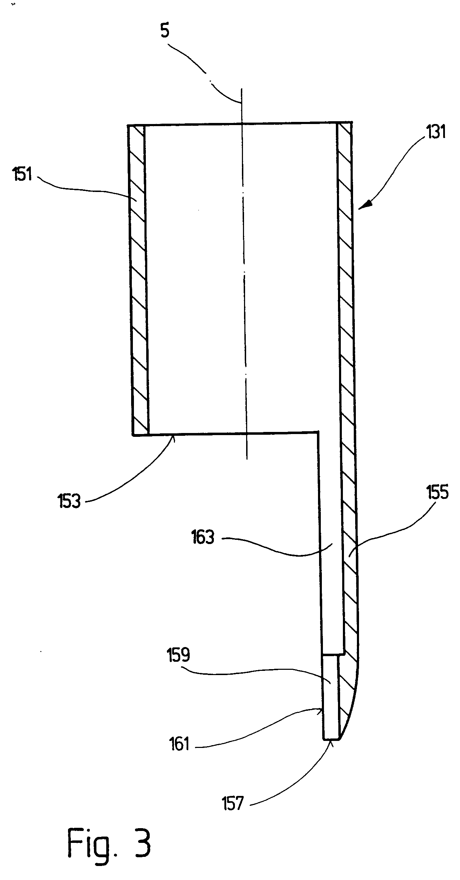

Nach allem wird deutlich, daß die hier beschriebene Reinigungskürette 31 auch einen vereinfachten Aufbau aufweisen kann, wie er beispielhaft in Figur 3 dargestellt ist, die einen Längsschnitt durch den unteren Teil eines zweiten Ausführungsbeispiels einer Reinigungskürette 131 wiedergibt. Die hier dargestellte Reinigungskürette weist einen im wesentlichen hülsenförmigen, das heißt zylindrischen Grundkörper 151 auf, der mit der anhand von Figur 1 erläuterten Aufnahme 39 verbindbar ist.

Der Grundkörper 151 kann als vollständig geschlossene Hülse oder als geschlitze Hülse ausgebildet sein.

Von der Unterkante 153 des Grundkörpers 151 entspringt ein Reinigungsarm 155, der praktisch einem streifenförmigen Abschnitt der anhand der Figuren 1 und 2 gezeigten Reinigungskürette 31 darstellt. Der streifenförmige Abschnitt weist einen sich an die Stirnseite 157 des Reinigungsarms 155 anschließenden Reinigungsbereich 159 auf, dessen Innenseite einen Abschnitt eines Zylinders darstellt und damit ein zu reinigendes Implantant 1 (hier nicht dargestellt) zumindest bereichsweise übergreift. Der Reinigungsbereich 159 weist hier eine Reinigungskante 161 auf, die der Schneide 53 des anhand der Figuren 1 und 2 dargestellten Ausführungsbeispiels entspricht. Die Reinigungskante verläuft hier im wesentlichen parallel zur Mittelachse 5 der Reinigungskürette 131. Es ist jedoch auch denkbar, daß die Reinigungskante 161 entlang einer gedachten Schraubenlinie verläuft, wie dies anhand von Figur 2 erläutert wurde. Bei einer derartigen Ausgestaltung entspricht der Reinigungsarm 155 einem Reinigungsfinger 55 des anhand der Figuren 1 und 2 dargestellten Ausführungsbeispiels.

Der Reinigungsarm 155 des in Figur 3 dargestellten Ausführungsbeispiels ist jedoch wesentlich schmaler als der Reinigungsfinger 55. Durch eine begrenzte Drehbewegung des Grundkörpers 151 können schmale definierte Bereiche eines Implantats 1 beziehungsweise eines Abutments gereinigt werden, also wesentlich kleinere Bereiche, als dies mit der anhand der Figuren 1 und 2 dargestellten Reinigungskürette 31 möglich ist.

Das zweite Ausführungsbeispiel der Reinigungskürette 131 ist also insbesondere für Spezialfälle einsetzbar. Bei einer vollständigen Drehung der Reinigungskürette 131 ist allerdings auch eine komplette Reinigung der Außenfläche eines Abutments möglich.

In allen Fällen ist es überdies denkbar, daß sich die Schneide 53 beziehungsweise Reinigungskante 161 bis zur Stirnseite beziehungsweise Unterkante 153 der Reinigungskürette 131 erstreckt, so daß bei einer derartigen Ausgestaltung auch der Knochen in unmittelbarer Umgebung des Implantats 1 abgetragen werden kann, sofern dies erforderlich beziehungsweise gewünscht ist.

Die Innenfläche 163 des Reinigungsarms 155 ist oberhalb der Stirnseite 157 zurückspringend ausgebildet, so daß auch Implantate bearbeitet werden können, die abschnittsweise unbehandelt bleiben sollen.

Die Reinigungkante 161 erstreckt sich dann ausgehend von der Stirnseite 157 des Reinigungsarms 155 lediglich über einen Bereich im untersten Abschnitt des Reinigungsarms, während weiter oben in Richtung zur Unterkante 153 des Grundkörpers 151 der Reinigungsarm ohne Berührung des Implantats 1 bleibt, wenn die Reinigungskürette 131 in eine Drehbewegung versetzt wird.

Es ist bei einer derartigen Ausgestaltung möglich, mit der Reinigungskante 161 beispielsweise die Oberfläche von Implantaten zu bearbeiten, die in ihrem obersten Abschnitt ein Gewinde aufweisen und in diesem Bereich unbehandelt bleiben sollen. Durch die zurückspringende Innenfläche 163 bleibt der oberste Gewindeabschnitt des Implantats 1 unbehandelt, während der darunterliegende Teil von der Reinigungskante 161 bearbeitet wird. Durch die spezielle Ausgestaltung der auch konkav auszubildenden Innenfläche 163 können auch nach oben sich erweiternde Implantate bearbeitet werden. Die erweiterten Abschnitte der Implantate liegen dann im zurückspringenden Bereich der Innenfläche 163, während die weiter innenliegenden Bereiche von der Reinigungskante 161 erreicht werden.

Aus den Erläuterungen zu Figur 3 wird deutlich, daß der Grundkörper 151 der Reinigungskürette 131 auch mit mehreren in einem Abstand zueinander liegenden Reinigungsarmen 155 versehen sein kann.

Die Reinigungsarme sind aufgrund der geringen Breite besonders federnd beziehungsweise nachgiebig ausgebildet, so daß eine schonende Bearbeitung der Oberfläche von Implantaten besonders gut möglich ist.

Sollte die Reinigungskürette 131 so ausgebildet sein, daß von dem Grundkörper 151 drei breite Reinigungsarme 155 entspringen, deren Reinigungskante 161 auf einer gedachten Schraubenlinie angeordnet ist, so ergibt sich im wesentlichen eine Ausgestaltung, wie sie anhand der Figuren 1 und 2 dargestellt wurde. Es ist also ersichtlich, daß die Reinigungskürette sehr variabel an spezielle Anwendungsfälle anpaßbar ist.

Schließlich sei noch darauf verwiesen, daß das zu dem ersten Ausführungsbeispiel der Reinigungskürette anhand der Figuren 1 und 2 gesagte grundsätzlich auch für das zweite Ausführungsbeispiel gemäß Figur 3 gilt. Das betrifft beispielsweise die Materialien, aus denen die Reinigungskürette 131 herstellbar ist, aber auch die Ankopplung der Reinigungskürette an eine Aufnahme 39, die anhand der Beschreibung zu Figur 1 erläutert wurde.

Aus den Erläuterungen zu den beiden Ausführungsbeispielen der Reinigungskürette wird deutlich, daß hier ein gegenüber bekannten Küretten grundsätzlich abweichendes Reinigungsprinzip verfolgt wird: Während mit bekannten hakenähnlichen Küretten die Oberfläche von Implantaten oder dergleichen im wesentlichen freigekratzt wird, wobei auch bei sehr geübten Personen nicht ausgeschlossen werden kann, daß weite Bereiche der Implantatoberfläche unbehandelt bleibt, erfolgt bei einer Reinigungskürette der erfindungsgemäßen Art eine Drehung der Kürette, bei der zwangsweise die gesamte Umfangsfläche des Implantats gereinigt wird. Da dessen Oberfläche bereichsweise übergriffen wird, wird die Oberfläche nicht strichweise gereinigt, wie dies bei hakenähnlichen Küretten der Fall ist. Vielmehr findet eine flächige Bearbeitung der Oberfläche des Implantats statt, bei der auch ungeübte Personen ohne weiteres in der Lage sind, alle Bereiche des Implantates zu behandeln, ohne daß unbearbeitete Flächenabschnitte zurückbleiben. Insbesondere bei einer langsamen Vorschubbewegung einer relativ schnell drehenden Kürette ist mit praktisch 100%iger Sicherheit eine flächendeckende Bearbeitung des Implantats gewährleistet. Es wird also eine sehr hohe Reinigungsqualität erzielt, selbst bei einer Verwendung der Kürette durch ungeübte Personen.

## Patentansprüche

1. Einrichtung zur Oberflächenbearbeitung von inserierten, oralen Implantaten und/oder darauf aufgesetzten Abutments, mit einer Reinigungskurette (31,131) die einen hülsenförmigen, die Oberfläche des Implantates zumindest bereichsweise übergreifenden Grundkörper aufweist, **dadurch gekennzeichnet,** daß die Reinigungskürette mindestens eine Kante aufweist, die als auf der Oberfläche abgelagerte Substanzen abtragende Schneide (53) oder Reinigungskante (161) ausgebildet ist.

2. Einrichtung nach Anspruch 1, **dadurch gekennzeichnet,** daß die Reinigungskürette (131) einen von dem Grundkörper (151) entspringenden Reinigungsarm (155) umfaßt, der die Reinigungskante (161) aufweist.

3. Einrichtung nach Anspruch 1 oder 2, **dadurch gekennzeichnet,** daß der Reinigungsarm (155) eine konkav gewölbte Innenfläche aufweist, die an die Kontur des Implantats angepaßt ist.

4. Einrichtung nach einem der vorhergehenden Ansprüche, **dadurch gekennzeichnet,** daß der Grundkörper (151) als drehsymmetrisches Teil ausgebildet ist und auf das Implantat beziehungsweise auf das Abutment aufsteckbar ist.

5. Einrichtung nach Anspruch 1, **dadurch gekennzeichnet,** daß die Reinigungskürette (31) mindestens einen Schlitz aufweist, dessen eine Kante die Schneide (53) bildet.

6. Einrichtung nach Anspruch 5, **dadurch gekennzeichnet,** daß die Hülse drei Schlitze (51) mit je einer Schneide (53) aufweist.

7. Einrichtung nach einem der vorhergehenden Ansprüche, **dadurch gekennzeichnet,** daß die Reinigungskante (161) oder Schneide (53) entlang einer gedachten Schraubenlinie oder parallel zur gedachten Mittelachse (5) der Reinigungskürette (31,131) verläuft.

8. Einrichtung nach einem der Ansprüche 5 bis 7, **dadurch gekennzeichnet,** daß die Reinigungskürette (31) als drehsymmetrisches Teil ausgebildet und auf das Implantat (1) beziehungsweise das Abutment aufsteckbar ist.

9. Einrichtung nach einem der vorhergehenden Ansprüche, **dadurch gekennzeichnet,** daß die Reinigungskürette (31, 131) aus Kunststoff, Metall und/oder Keramik herstellbar ist.

10. Einrichtung nach einem der vorhergehenden Ansprüche, **dadurch gekennzeichnet,** daß die Reinigungskürette (31, 131) auf eine Aufnahme (39) aufsetzbar ist.

11. Einrichtung nach einem der vorhergehenden Ansprüche, mit einer Führung (11), die auf das zu reinigende Implantat (1) oder Abutment aufsetzbar ist.

12. Einrichtung nach Anspruch 11, **dadurch gekennzeichnet,** daß die Oberfläche der Führung (11) drehsymmetrisch ausgebildet ist.

13. Einrichtung nach einem der vorhergehenden Ansprüche, **dadurch gekennzeichnet,** daß der Außendurchmesser der Führung (11) in dem an das Implantat (1) beziehungsweise das Abutment angrenzenden Bereich (19) einen Außendurchmesser aufweist, der dem Außendurchmesser des Implantats (1) beziehungsweise des Abutments entspricht.

14. Einrichtung nach einem der Ansprüche 11 bis 13, **dadurch gekennzeichnet,** daß die Oberfläche der Führung (11) zumindest einen kegelstumpfmantelförmig ausgebildeten Bereich (21) aufweist.

15. Einrichtung nach einem der vorhergehenden Ansprüche**, dadurch gekennzeichnet,** daß die Führung (11) in das Innere der Reinigungskürette (31) eingreift.

16. Einrichtung nach einem der vorhergehenden Ansprüche, **dadurch gekennzeichnet,** daß die Führung (11) in das Innere der Aufnahme (39) eingreift.

## Claims

1. A device for the surface treatment of inserted oral implants and/or abutments placed thereon, having a cleaning curette (31, 131) which has a sleeve-shaped basic body engaging over at least regions of the surface of the implant, characterised in that the cleaning curette has at least one edge in the form of a cutting edge (53) or cleaning edge (161) for removing substances deposited on the surface.

2. A device in accordance with Claim 1, characterised in that the cleaning curette (131) comprises a cleaning arm (155) extending from the basic body (151) and having the cleaning edge (161).

3. A device in accordance with Claim 1 or 2, characterised in that the cleaning arm (155) has a concavely curved inner surface matched to the contour of the implant.

4. A device in accordance with any one of the preceding Claims, characterised in that the basic body (151) is an axially symmetrical part and can be put onto the implant or onto the abutment.

5. A device in accordance with Claim 1, characterised in that the cleaning curette (31) has at least one slit one edge of which forms the cutting edge (53).

6. A device in accordance with Claim 5, characterised in that the sleeve has three slits (51) which each have a cutting edge (53).

7. A device in accordance with any one of the preceding Claims, characterised in that the cleaning edge (161) or cutting edge (53) extends along an imaginary helix or parallel to the imaginary centre line (5) of the cleaning curette (31, 131).

8. A device in accordance with any one of Claims 5 to 7, characterised in that the cleaning curette (31) is in the form of an axially symmetrical part and can be put onto the implant (1) or the abutment.

9. A device in accordance with any one of the preceding Claims, characterised in that the cleaning curette (31, 131) can be manufactured from a plastics material, metal and/or ceramic.

10. A device in accordance with any one of the preceding Claims, characterised in that the cleaning curette (31, 131) can be attached to a receiver (39).

11. A device in accordance with any one of the preceding Claims, having a guide (11) which can be attached to the implant (1) or abutment to be cleaned.

12. A device in accordance with Claim 11, characterised in that the surface of the guide (11) is axially symmetrical.

13. A device in accordance with any one of the preceding Claims, characterised in that in the region (19) of the guide (11) adjacent to the implant (1) or the abutment, the external diameter of the guide (11) corresponds to the external diameter of the implant (1) or the abutment.

14. A device in accordance with any one of Claims 11 to 13, characterised in that the surface of the guide (11) has at least one region (21) in the form of the lateral area of a truncated cone.

15. A device in accordance with any one of the preceding Claims, characterised in that the guide (11) engages into the interior of the cleaning curette (31).

16. A device in accordance with any one of the preceding Claims, characterised in that the guide (11) engages into the interior of the receiver (39).

## Revendications

1. Dispositif de nettoyage de surface d'implants dentaires insérés, et/ou d'embouts montés sur ces derniers, avec une curette de nettoyage (31, 131) qui engage par recouvrement au moins pour partie la surface de l'implant et présente un corps de base en forme de manchon, **caractérisé** en ce que la curette de nettoyage présente au moins une arête qui est réalisée sous forme de tranchant (53) ou d'arête de nettoyage (161) enlevant les substances déposées sur la surface.

2. Dispositif selon la revendication 1, **caractérisé** en ce que la curette de nettoyage (131) comprend un bras de nettoyage (155), qui est issu du corps de base (151) et présente l'arête de nettoyage (161).

3. Dispositif selon la revendication 1 ou 2, **caractérisé** en ce que le bras de nettoyage (155) présente une face intérieure de courbure concave, qui est adaptée au contour de l'implant.

4. Dispositif selon une des revendications précédentes, **caractérisé** en ce que le corps de base (151) est conçu comme élément symétrique en rotation, et peut être emboîté sur l'implant ou encore l'embout.

5. Dispositif selon la revendication 1, **caractérisé** en ce que la curette de nettoyage (31) présente au moins une fente, dont une arête constitue le tranchant (53).

6. Dispositif selon la revendication 5, **caractérisé** en ce que le manchon présente trois fentes (51) pourvues chacune d'un tranchant (53).

7. Dispositif selon une des revendications précédentes, **caractérisé** en ce que l'arête de nettoyage (161) ou le tranchant (53) s'étend le long d'une hélice imaginaire ou parallèlement à l'axe médian imaginaire (5) de la curette de nettoyage (31, 131).

8. Dispositif selon une des revendications 5 à 7, **caractérisé** en ce que la curette de nettoyage (31) est conçu comme élément symétrique en rotation et peut être emboîtée sur l'implant (1) ou encore l'embout.

9. Dispositif selon une des revendications précédentes, **caractérisé** en ce que la curette de nettoyage (31, 131) peut être fabriquée en matière plastique, en métal et/ou en matériau céramique.

10. Dispositif selon une des revendications précédentes, **caractérisé** en ce que la curette de nettoyage (31, 131) peut être montée sur un élément récepteur (39).

11. Dispositif selon une des revendications précédentes, avec un guide (11) qui peut être monté sur l'implant (1) ou embout à nettoyer.

12. Dispositif selon la revendication 11, **caractérisé** en ce que la surface du guide (11) est réalisée symétrique en rotation.

13. Dispositif selon une des revendications précédentes, **caractérisé** en ce que le diamètre extérieur du guide (11) présente, dans la région (19) limitrophe de l'implant (1) ou encore de l'embout, un diamètre extérieur qui correspond au diamètre extérieur de l'implant (1) ou encore de l'embout.

14. Dispositif selon une des revendications 11 à 13, **caractérisé** en ce que la surface du guide (11) présente au moins une région (21) réalisée en forme d'enveloppe de tronc de cône.

15. Dispositif selon une des revendications précédentes, **caractérisé** en ce que le guide (11) s'engage à l'intérieur de la curette de nettoyage (31).

16. Dispositif selon une des revendications précédentes, **caractérisé** en ce que le guide (11) s'engage à l'intérieur de l'élément récepteur (39).
